# FASCICULE DE BREVET EUROPEEN

(11) **EP 0 835 999 B1**
(45) Date de publication et mention de la délivrance du brevet: **09.07.2003**
(21) Numéro de dépôt: 97402307.9
(22) Date de dépôt: 02.10.1997
(51) Int. Cl.: F02K 1/70

(54) **Inverseur de poussée à portes à installation de vérin de commande optimisée**
Schubumkehrvorrichtung mit optimalisierter Anordnung des Betätigungsorgans
Thrust reverser with optimized actuator position

(30) Priorité: 03.10.1996 FR 9612046
(43) Date de publication de la demande: 15.04.1998
(73) Titulaire: HUREL-HISPANO LE HAVRE, 76700 Harfleur (FR)
(72) Inventeur: Baudu, Pierre André Marcel, 76600 - Le Havre (FR); Lore, Xavier Raymond Yves, 76210 - Beuzeuille La Grenier (FR)
(74) Mandataire: Berrou, Paul

(56) Documents cités:
- EP-A- 0 067 747
- FR-A- 2 618 853
- US-A- 5 230 213
- US-A- 5 243 817

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas dans ce cas d'ensembles propulsifs rapportés sur l'extérieur d'aéronef, particulièrement lorsque ces ensembles propulsifs sont attachés sous les ailes ou à l'arrière du fuselage.

Nous appellerons capotage extérieur, l'ensemble constitué par la paroi extérieure de la nacelle

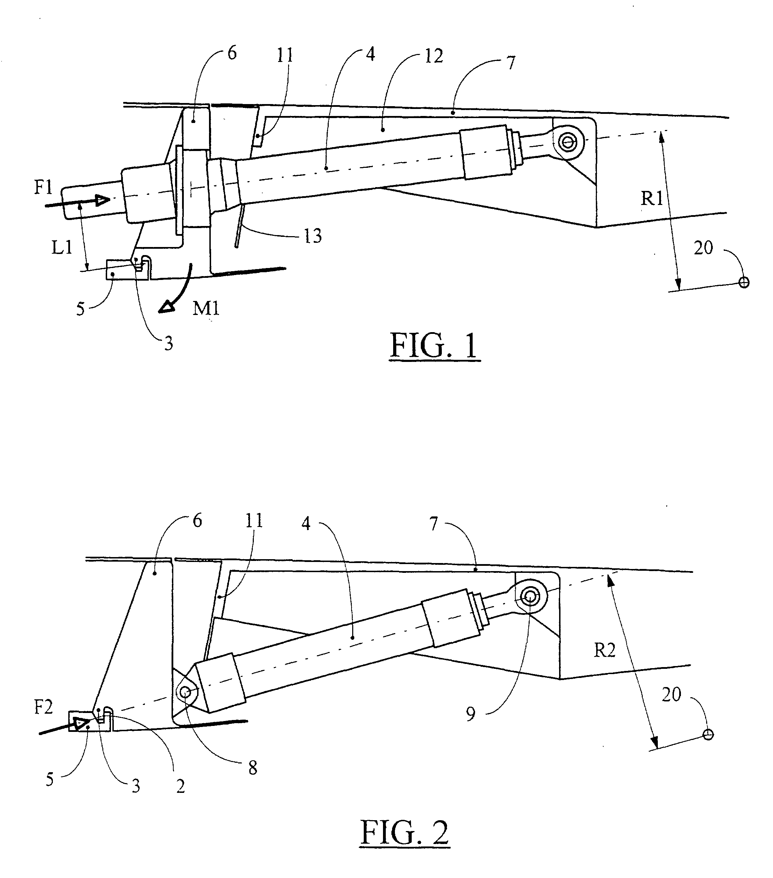

La figure 1 des dessins joints montre un exemple connu de réalisation d'un inverseur de poussée de ce type, appliqué à un turboréacteur à double flux.

Le dispositif d'inversion est constitué de portes 7 formant une partie mobile et constituant en position inactive, lors d'un fonctionnement en jet direct, une partie du capotage extérieur, et d'une structure fixe réalisant ce capotage extérieur en amont des portes, par une partie amont, en aval des portes par une partie aval et entre les portes 7 par l'intermédiaire de poutres qui relient la partie aval du capotage extérieur à la partie amont du capotage extérieur. Les portes 7 sont montées sur une circonférence du capotage extérieur et sont montées pivotantes dans une zone intermédiaire de leurs parois latérales sur les poutres situées de part et d'autre de ces portes, ces parois latérales constituant avec les parois amont et aval, les parois qui relient la partie extérieure des portes 7, qui constituent une partie de la paroi extérieure de la nacelle, à la partie intérieure des portes 7, qui constituent une partie de la paroi extérieure du conduit.

La partie amont de structure fixe comporte un cadre avant 6 qui sert de support aux moyens de commande des déplacements des portes 7, constitués par exemple par des vérins 4.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1.482.538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne des portes 7, même en jet direct sans pour autant faire saillie dans le conduit qui est dans cet exemple muni de cavités légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547

Enfin, la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme c'est le cas selon FR 1.482.538 cité ci-dessus.

Pour des raisons de simplicité technologique principalement, le vérin de commande de manoeuvre des portes regroupe une fonction de verrouillage, généralement réalisée par des griffes agissant sur la tige mobile du vérin. Ce système pour des raisons de débattement du piston se situe soit en aval ou en amont dudit piston.

La longueur du vérin résultant des impératifs de cinématique, de charge et d'encombrement du système de verrouillage est généralement très importante par rapport à l'environnement structural et oblige à installer le vérin à travers le cadre avant de la structure fixe de l'inverseur.

Le fait que le vérin est positionné de telle manière génère plusieurs problèmes d'ordre structural.

Un premier problème est représenté sur la figure 1. Pour les raisons déja citées et afin de ne pas interrompre la virole d'interface entre l'inverseur et le moteur, le vérin est placé dans une zone intermédiaire de la structure verticale du cadre. L'effort résultant F1, de l'action du vérin 4 sur la manoeuvre de la porte 7, et la distance L1, de la direction de l'effort vérin et de l'interface d'accostage du couteau 3 de l'inverseur sur la bride 5 du moteur, génère un couple de torsion M1 important dans la structure du cadre avant 6.

Un second problème est d'avoir la rotule, permettant le débattement du vérin, placée autour du corps du vérin et installée sur le cadre 6, obligeant à avoir une ouverture dans le cadre 6 très importante.

Ces deux problèmes ont des impacts structuraux et obligent à renforcer, et donc à alourdir, le cadre 6 sans toutefois annuler complètement la déformation en torsion de celui-ci.

Un troisième problème est d'avoir une partie du vérin et ses tuyauteries d'alimentation, qui peuvent être souples, en amont du cadre avant qui est une zone feu.

Ces techniques antérieures connues sont illustrées par EP-A-0067747.

Un des buts de l'invention est de proposer un moyen qui permet de réduire voire de supprimer le moment de torsion développé dans la structure fixe amont d'un inverseur de poussée lors du fonctionnement du vérin de commande des déplacements de porte d'inverseur. Un autre but de l'invention est de ménager une installation du vérin susceptible de réduire la masse de l'inverseur, compte-tenu que dans les solutions connues antérieures du type décrit ci-dessus en référence à la figure 1, la part de la structure fixe amont transmettant les efforts de vérin vers un carter du turboréacteur peut représenter jusqu'à 30 % de la masse totale de la structure de l'inverseur incluant les portes.

Ces buts sont atteints, conformément à l'invention, par un inverseur de poussée du type précité caractérisé en ce que un point de liaison du vérin de commande avec la structure fixe amont d'inverseur et un point de liaison du vérin de commande avec la porte d'inverseur sont alignés avec un point de contact situé au niveau du dispositif d'installation de l'inverseur sur le turboréacteur entre un couteau solidaire de la structure fixe amont d'inverseur et une bride d'interface solidaire du carter de turboréacteur, ledit alignement entre les trois points étant recherché pour la position de porte, en phase d'ouverture ou de fermeture, exigeant l'effort de vérin le plus important.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description;
- la figure 2 représente dans une vue analogue à la figure 1, un inverseur de poussée à portes pivotantes, en position jet direct, selon un mode de réalisation de l'invention ;
- la figure 3 représente dans une vue analogue à la figure 1, un inverseur de poussée à portes pivotantes, en position jet direct, selon un autre mode de réalisation de l'invention ;
- la figure 4 représente un détail de la jonction du couteau avec la bride d'interface du turboréacteur selon une solution connue antérieure ;
- la figure 5 représente le même détail que sur la figure 4 dans un mode de réalisation de l'invention.

Selon un mode de réalisation de l'invention représenté sur la figure 2, dans un inverseur de poussée de turboréacteur du type connu en soi et précédemment décrit en référence à la figure 1, un vérin 4 de commande de manoeuvre de la porte 7 est relié à ladite porte en un point 9.

Le principe d'installation, déja connu, de l'inverseur sur le turboréacteur est réalisé par un couteau 3, solidaire de la structure 6 de l'inverseur, contenu dans une bride d'interface 5, solidaire du turboréacteur.

Un point moyen 2 de transit d'effort est considéré environ au milieu du recouvrement entre le couteau 3 et la bride d'interface 5 du côté de la partie aval du couteau 3.

L'originalité de l'invention est de considérer une ligne reliant le point 2 de la structure fixe et le point 9 de la structure mobile, et de positionner l'accrochage de la tête du vérin 4 sur le cadre 6 de la structure fixe, en un point 8 sur cette ligne. De ce fait le moment de torsion du cadre 6 est supprimé et les efforts F2 induits par le vérin se diffusent mieux vers la bride d'interface 5 du turboréacteur.

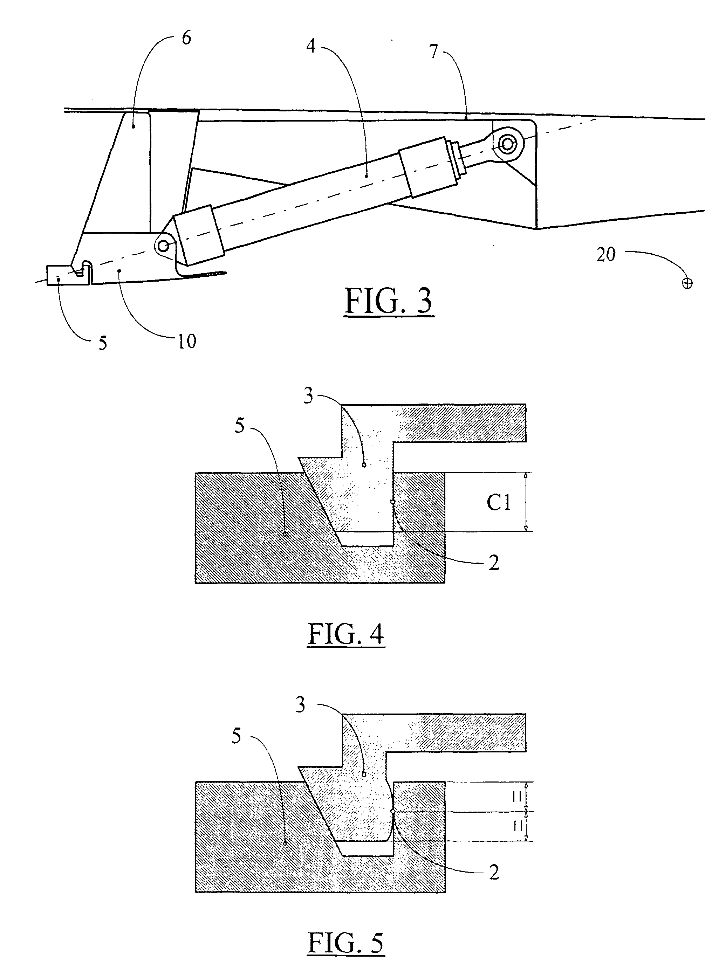

Le point 9 est pris soit en position porte 7 fermée, en position ouverte ou toute autre position de la porte 7 en phase d'ouverture ou de fermeture donnant l'effort maximum de manoeuvre sur le vérin 4. Le point d'accrochage 8 de la tête du vérin 4 peut être solidaire du cadre 6 comme représenté sur la figure 2, il peut aussi être associé à une structure de liaison indépendante 10 et reliée directement à la bride d'interface 5 du turboréacteur comme représenté sur la figure 3.

Le fait de positionner l'accrochage de la tête du vérin en aval et en partie inférieure du cadre 6 procure plusieurs autres avantages qui sont :
- la tuyauterie flexible d'alimentation en hydraulique est dans une zone hors feu ;
- le cadre peut avoir une structure allégée et ainsi un gain en masse peut être envisagé ;
- la découpe faite dans le becquet 13 de porte pour le passage vérin en est d'autant réduite, améliorant l'efficacité en jet inversé ;
- la partie amont du vérin 4 étant en dehors du tunnel 12 de la porte 7, le cadre amont structural 11 de la porte 7 peut avoir une inertie plus importante ;
- dans le cas d'utilisation de becquet mobile, celui-ci reçoit une découpe réduite de passage du vérin, améliorant la tenue structurale ;
- pour un même environnement géométrique défini, le bras de levier R2, entre la direction d'effort du vérin 4 et le point pivot 20 de la porte 7 montré sur la figure 2, est plus grand que le bras de levier R1, montré sur la figure 1. Ce paramètre permet d'alléger en conséquence la structure générale de l'inverseur.

La figure 4 montre que le point 2 de transit d'effort, considéré au milieu du recouvrement entre le couteau 3 et la bride d'interface 5 du côté de la partie aval du couteau 3, est en fait tributaire des tolérances géométriques de réalisation des pièces mécaniques et peut varier dans toute la fourchette C1. En effet le contact entre les deux pièces ne repose pas sur une surface mais sur une génératrice. Ceci peut occasionner des variations de transit d'effort sur le couteau 3 en créant un moment entre l'axe d'alignement théorique du vérin 4 et l'application effective du point 2 sur la bride d'interface 5 du moteur.
Pour remédier à cela, une forme spécifique peut être appliquée à la partie aval du couteau 3 pour assurer un point 2 toujours en alignement avec les points 8 et 9 comme montré sur la figure 5.

Il est à noter que l'utilisation d'un vérin sans verrouillage interne permet de répondre au problème d'encombrement pour le loger sur un inverseur de type courant et connu comme envisagé précédemment. Le vérin peut être simple ou télescopique et sa commande peut être hydraulique, électrique ou pneumatique.
Par contre si l'environnement le permet, il est possible d'appliquer l'invention avec un vérin comportant un verrouillage interne.

L'invention peut être appliquée en vérin latéral, soit en utilisant un seul vérin 4 par porte 7, sur un côté défini en fonction des applications, ou en utilisant un vérin par côté de porte 7.
Dans ce cas, l'accrochage du point 8 peut être appliqué, soit seul ou en association avec le cadre 6, sur les structures latérales dites poutres.

## Revendications

1. Inverseur de poussée de turboréacteur à double flux comportant des portes pivotantes (7), en position fermée, lors d'un fonctionnement en jet direct, s'intégrant dans la paroi extérieure du conduit de flux en arrière de la soufflante de turboréacteur, et en outre, chacune pivotant autour de pivots portés par la structure fixe de l'inverseur sous l'action d'un vérin (4) de commande des déplacements de manière à constituer des obstacles de déviation de flux lors d'un fonctionnement en inversion de poussée **caractérisé en ce que** un point de liaison (8) dudit vérin de commande (4) avec la structure fixe amont de l'inverseur et un point de liaison (9) du vérin de commande (4) avec la porte (7) d'inverseur sont alignés avec un point de contact (2), situé au niveau du dispositif d'installation de l'inverseur sur le turboréacteur, entre un couteau (3) solidaire de la structure fixe amont d'inverseur et une bride (5) d'interface solidaire du carter de turboréacteur, ledit alignement entre les deux points (8,9) de vérin et le point (2) d'accrochage de l'inverseur sur le turboréacteur étant réalisé pour la position de porte (7), en phase d'ouverture ou de fermeture, exigeant l'effort de vérin le plus important.

2. Inverseur de poussée de turboréacteur à double flux selon la revendication 1 dans lequel le point de contact (2) situé au niveau du dispositif d'installation de l'inverseur sur le turboréacteur est placé au milieu de la zone C1 de recouvrement entre la face aval d'appui du couteau (3) solidaire de la structure fixe amont d'inverseur et la face coopérante de la bride (5) d'interface solidaire du carter de turboréacteur.

3. Inverseur de poussée de turboréacteur à double flux selon l'une quelconque des revendications 1 ou 2 dans lequel, au niveau du dispositif d'installation de l'inverseur sur le turboréacteur, la face aval d'appui du couteau (3) solidaire de la structure fixe amont d'inverseur présente une forme spécifique non plane de manière à assurer un alignement des trois points (2,8,9) fiable et constant.

4. Inverseur de poussée de turboréacteur à double flux selon l'une quelconque des revendications 1 à 3 dans lequel ledit point de liaison (8) du vérin (4) avec la structure fixe amont est situé sur le cadre avant (6).

5. Inverseur de poussée de turboréacteur à double flux selon l'une quelconque des revendications 1 à 3 dans lequel ledit point de liaison (8) du vérin (4) avec la structure fixe amont est situé sur une pièce (10) indépendante du cadre avant (6) et reliée directement à la bride (5) d'interface du carter de turboréacteur.

## Patentansprüche

1. Schubumkehrvorrichtung für Zweikreis-TL-Triebwerke, die Schwenkklappen (7) aufweist, die sich in Schließstellung im Direktstrahlbetrieb in die Außenwand der Strömungsleitung hinter dem Gebläse des Turbotriebwerks einfügen und ferner jeweils unter der Einwirkung eines Bewegungs-Steuerzylinders (4) dergestalt um Drehachsen schwenken, die an dem festen Aufbau der Schubumkehrvorrichtung sitzen, dass sie im Umkehrschubbetrieb Strömungs-Umlenkhindernisse bilden,
**dadurch gekennzeichnet,**
**dass** ein Verbindungspunkt (8) dieses Steuerzylinders (4) mit dem vorderen festen Aufbau der Schubumkehrvorrichtung und ein Verbindungspunkt (9) des Steuerzylinders (4) mit der Schubumkehr-Klappe (7) mit einem Kontaktpunkt (2), der sich im Bereich der Einbauvorrichtung der Schubumkehrvorrichtung an dem Turbotriebwerk zwischen einer mit dem vorderen festen Aufbau der Schubumkehrvorrichtung fest verbundenen Nase (3) und einem mit dem Gehäuse des Turbotriebwerks fest verbundenen Grenzflächenflansch (5) befindet, auf einer Linie ausgerichtet sind, wobei diese Ausrichtung zwischen den beiden Punkten (8, 9) des Zylinders und dem Punkt (2) der Befestigung der Schubumkehrvorrichtung an dem Turbotriebwerk für die Stellung der Klappe (7) in der Öffnungs- oder Schließphase ausgeführt ist, die den größten Kraftaufwand des Zylinders erfordert.

2. Schubumkehrvorrichtung für Zweikreis-TL-Triebwerke nach Anspruch 1, bei der der Kontaktpunkt (2), der sich im Bereich der Einbauvorrichtung der Schubumkehrvorrichtung an dem Turbotriebwerk befindet, in der Mitte des Bereichs C1 der Überdeckung zwischen der hinteren Anlageseite der mit dem vorderen festen Aufbau der Schubumkehrvorrichtung fest verbundenen Nase (3) und der zusammenwirkenden Seite des mit dem Gehäuse des Turbotriebwerks fest verbundenen Grenzflächenflanschs (5) angeordnet ist.

3. Schubumkehrvorrichtung für Zweikreis-TL-Triebwerke nach einem der Ansprüche 1 oder 2, bei der im Bereich der Einbauvorrichtung der Schubumkehrvorrichtung an dem Turbotriebwerk die hintere Anlageseite der mit dem vorderen festen Aufbau der Schubumkehrvorrichtung fest verbundenen Nase (3) eine spezifische, nicht ebene Form aufweist, so dass eine zuverlässige und konstante Ausrichtung der drei Punkte (2, 8, 9) gewährleistet ist.

4. Schubumkehrvorrichtung für Zweikreis-TL-Triebwerke nach einem der Ansprüche 1 bis 3, bei der sich der Verbindungspunkt (8) des Zylinders (4) mit dem vorderen festen Aufbau an dem vorderen Rahmen (6) befindet.

5. Schubumkehrvorrichtung für Zweikreis-TL-Triebwerke nach einem der Ansprüche 1 bis 3, bei der sich der Verbindungspunkt (8) des Zylinders (4) mit dem vorderen festen Aufbau an einem von dem vorderen Rahmen (6) unabhängigen Teil (10) befindet, das direkt mit dem Grenzflächenflansch (5) des Gehäuse des Turbotriebwerks verbunden ist.

## Claims

1. Bypass turbojet thrust reverser comprising pivoting doors (7), in a closed position, during operation in direct jet mode, becoming incorporated into the outer wall of the flow duct behind the turbojet fan and also each pivoting about pivots borne by the fixed structure of the reverser under the action of a motion-control ram (4) in such a way as to form obstacles deflecting the flow during operation in reverse thrust mode, **characterized in that** a point of connection (8) of the said control ram (4) with an upstream fixed structure of the reverser and a point of connection (9) of the control ram (4) with the reverser door (7) are aligned with a point of contact (2) situated at the device for installation of the reverser on the turbojet, between a flap edge (3) secured to the reverser upstream fixed structure and an interface flange (5) secured to the turbojet casing, the said alignment between the two ram points (8, 9) and the points (2) of attachment of the reverser to the turbojet being performed for the position of the door (7), in the opening or closing phase, that demands the greatest ram force.

2. Bypass turbojet thrust reverser according to Claim 1, in which the point of contact (2) situated at the device for installation of the reverser on the turbojet is placed in the middle of the region C1 of the overlap between the downstream bearing face of the flap edge (3) secured to the reverser upstream fixed structure and the collaborating face of the interface flange (5) secured to the turbojet casing.

3. Bypass turbojet thrust reverser according to either one of Claims 1 and 2, in which, at the device for installation of the reverser on the turbojet, the downstream bearing face of the flap edge (3) secured to the reverser upstream fixed structure has a specific non-planar shape so as to allow reliable and constant alignment of the three points (2, 8, 9).

4. Bypass turbojet thrust reverser according to any one of Claims 1 to 3, in which the said point of connection (8) of the ram (4) with the upstream fixed structure is situated on the front frame (6).

5. Bypass turbojet thrust reverser according to any one of Claims 1 to 3, in which the said point of connection (8) of the ram (4) with the upstream fixed structure is situated on a piece (10) independent of the front frame (6) and connected directly to the interface flange (5) of the turbojet casing.
